# EUROPEAN PATENT APPLICATION

(11) **EP 4 456 186 A1**
(43) Date of publication of application: **30.10.2024**
(21) Application number: 22911776.7
(22) Date of filing: 15.12.2022
(51) Int. Cl.: H01M 4/36, H01M 4/38, H01M 4/587, H01M 4/62, H01M 10/052, H01M 4/02

(54) **LITHIUM-ION BATTERY NEGATIVE ELECTRODE MATERIAL WITH IMPROVED REVERSIBILITY, AND METHOD FOR MANUFACTURING SAME**

(30) Priority: 22.12.2021 KR 20210185002
(71) Applicant: POSCO Holdings Inc., Seoul 06194 (KR); RESEARCH INSTITUTE OF INDUSTRIAL SCIENCE & TECHNOLOGY, Pohang-si, Gyeongsangbuk-do 37673 (KR)
(72) Inventor: YOU, Seung Jae, Pohang-si, Gyeongsangbuk-do 37655 (KR); WOO, Jung Gyu, Pohang-si, Gyeongsangbuk-do 37671 (KR); CHO, Moonkyu, Pohang-si, Gyeongsangbuk-do 37671 (KR); PARK, Sangeun, Hanam-si, Gyeonggi-do 12907 (KR); KIM, Yong Jung, Pohang-si, Gyeongsangbuk-do 37673 (KR); PARK, Sun Jong, Pohang-si, Gyeongsangbuk-do 37655 (KR); KANG, Eun-Tae, Pohang-si, Gyeongsangbuk-do 37681 (KR); JO, Hyun-Chul, Pohang-si, Gyeongsangbuk-do 37834 (KR)
(74) Representative: Pfenning, Meinig & Partner mbB
(86) International application number: PCT/KR2022/020492
(87) International publication number: WO 2023/121143

(57) **Abstract**

The present exemplary embodiments may provide a negative electrode material for a lithium secondary battery, the negative electrode material containing nano-silicon, crystalline carbon, amorphous carbon, and carbon nanotubes, wherein one end of the carbon nanotube is located inside the negative electrode material and the other end of the carbon nanotube protrudes out of the negative electrode material, and an average length of the carbon nanotubes protruding out of the negative electrode material is 0.1 µm to 1 µm.

## Description

### [Technical Field]

The present disclosure relates to a negative electrode material for a lithium secondary battery and a method for producing the same. More particularly, the present disclosure relates to a negative electrode material for a lithium secondary battery having improved reversibility, the negative electrode material containing carbon nanotubes protruding out of the negative electrode material, and a method for producing the same.

### [Background Art]

A lithium ion battery is a secondary battery system currently most widely used in a portable electronic communication device, an electric vehicle, and an energy storage device. Such a lithium ion battery has attracted attention due to advantages such as a high energy density and operating voltage and a relatively small self-discharge rate as compared with a commercial aqueous secondary battery (Ni-Cd, Ni-MH, or the like). However, considering a more efficient use time in a portable device, improvement of energy characteristics in an electric vehicle, and the like, improvement in electrochemical characteristics still remains as technical problems to be solved. For this reason, a lot of research and development has been currently conducted over four raw materials such as a positive electrode, a negative electrode, an electrolyte, and a separator.

A graphite-based material exhibiting excellent capacity retention characteristics and efficiency has been commercially available for the negative electrode among these raw materials. However, a relatively low theoretical capacity value (LiCe: 372 mAh/g) and a low discharge capacity ratio of the graphite-based material are somewhat insufficient to meet high energy and high power density characteristics of batteries required by the market. Accordingly, many researchers have been interested in group IV elements (Si, Ge, and Sn) on the periodic table. Among the group IV elements, Si has attracted attention as a significantly attractive material due to a significantly high theoretical capacity (Li₁₅Si₄: 3,600 mAh/g) and low operating voltage (from 0.1 V vs. Li/Li+) characteristics. However, general Si-based negative electrode materials have the disadvantage of being difficult to apply to actual batteries due to a volume change of up to 300% during a cycle and low discharge capacity ratio characteristics.

In order to solve these problems, Chinese Patent No. CN 2006-10170615 (BYD) discloses that a composite material contains elemental silicon, graphite, and amorphous carbon, and the composite material contains carbon nanotubes, which improves the performance, and Korean Patent No. 10-0569188 discloses that the performance may be improved by constituting an electrode by applying carbon fibers such as VGCF. In general, carbon nanotubes have excellent mechanical and electrical properties and are attracting attention as an effective material for improving structural stability and conductivity of a Si negative electrode material. However, it is important for these carbon nanotubes and carbon fibers to secure uniform dispersion characteristics in the material or electrode, and when this is not achieved, since a high specific surface area is provided, an electrical path loss between negative electrode material particles occurs, resulting in performance deterioration.

Therefore, there is a need to develop a technique that may control the electrical path loss and solve the deterioration problem.

### [Disclosure]

### [Technical Problem]

The present disclosure has been made in an effort to provide a negative electrode material having advantages of having improved charge-discharge reversibility and expansion characteristics by supplementing conductivity of nano-silicon through two-dimensional physical bonding with nano-silicon inside negative electrode material particles through addition of linear carbon nanotubes having excellent mechanical strength and conductivity to a negative electrode material formed of nano-silicon and carbon. In addition, the present disclosure has been made in an effort to provide a negative electrode material having advantages of minimizing the amount of carbon nanotubes used when constituting an electrode of a battery by providing an electrical path between negative electrode material particles through formation of carbon nanotubes protruding out of the negative electrode material.

### [Technical Solution]

An exemplary embodiment of the present disclosure provides a negative electrode material for a lithium secondary battery, the negative electrode material containing: nano-silicon, crystalline carbon, amorphous carbon, and carbon nanotubes, wherein one end of the carbon nanotube is located inside the negative electrode material and the other end of the carbon nanotube protrudes out of the negative electrode material, and an average length of the carbon nanotubes protruding out of the negative electrode material is 0.1 µm to 1 µm.

The average length of the carbon nanotubes protruding out of the negative electrode material may be 0.5% to 10% of the total length of the carbon nanotubes.

The negative electrode material may further contain carbon nanotubes located only inside the negative electrode material.

A content of the carbon nanotubes may be 0.25 wt% to 1.5 wt% with respect to the total weight of the crystalline carbon and the amorphous carbon contained in the negative electrode material.

A specific surface area of the negative electrode material may be 4 m²/g to 5.0 m²/g.

The amorphous carbon may be coal-based pitch having a content of fixed carbon of 70 wt% or more and a β-resin value of 25 or more, and the crystalline carbon may include one or more selected from natural graphite and artificial graphite.

Another exemplary embodiment of the present disclosure provides a method for producing a negative electrode material for a lithium secondary battery, the method including: preparing a solution by mixing a nano-silicon slurry, a carbon nanotube slurry, and crystalline carbon; preparing a first precursor by spray drying the solution; mixing the first precursor and amorphous carbon, filling a mold with the mixture, performing pressurization at a high temperature, and then performing carbonization to produce a carbonized block; preparing a second precursor by mixing and coating the produced carbonized block with amorphous carbon; and carbonizing and classifying the second precursor, wherein the preparing of the first precursor by spray drying the solution includes controlling an average particle size (D50) of the first precursor to 8 µm to 30 µm.

In the controlling of the size of the first precursor, the average particle size (D50) of the first precursor may be controlled to 10 µm to 25 µm.

In the preparing of the solution by mixing the nano-silicon slurry, the carbon nanotube slurry, and the crystalline carbon, a content of the carbon nanotubes may be 0.25 wt% to 1.5 wt% with respect to the total weight of the crystalline carbon and the amorphous carbon contained in the negative electrode material.

In the produced negative electrode material for a lithium secondary battery, one end of the carbon nanotube may be located inside the negative electrode material and the other end of the carbon nanotube may protrude out of the negative electrode material, and an average length of the carbon nanotubes protruding out of the negative electrode material may be 0.1 µm to 1 µm.

The average length of the carbon nanotubes protruding out of the negative electrode material may be 0.5% to 10% of the total length of the carbon nanotubes.

### [Advantageous Effects]

According to the present exemplary embodiment, the negative electrode material contains carbon nanotubes dispersed through the inside and outside of the negative electrode material, such that the charge-discharge reversibility may be improved by improvement of the conductivity of the nano-silicon inside the negative electrode material and improvement of the contact between adjacent particles outside the negative electrode material.

Therefore, a cycle life of a lithium ion battery to which the negative electrode material according to the present exemplary embodiment is applied may be improved.

### [Description of the Drawings]

FIGS. 1A and 1B illustrate images of a negative electrode material containing carbon nanotubes according to an exemplary embodiment of the present disclosure.
FIGS. 2A and 2B illustrate enlarged images of FIGS. 1A and 1B.
FIG. 3 illustrates results of measuring conductivity according to a density of a first precursor according to an exemplary embodiment of the present disclosure.
FIG. 4 illustrates results of measuring conductivity according to a density of the negative electrode material according to an exemplary embodiment of the present disclosure.
FIG. 5 illustrates results of measuring a recovery voltage after the end of discharge compared to the amount of carbon nanotubes added.

### [Best Mode for Invention]

The terms "first", "second", "third", and the like are used to describe various parts, components, regions, layers, and/or sections, but are not limited thereto. These terms are only used to differentiate a specific part, component, region, layer, or section from another part, component, region, layer, or section. Accordingly, a first part, component, region, layer, or section which will be described hereinafter may be referred to as a second part, component, region, layer, or section without departing from the scope of the present disclosure.

Terminologies used herein are to mention only a specific exemplary embodiment, and are not to limit the present disclosure. Singular forms used herein include plural forms as long as phrases do not clearly indicate an opposite meaning. The term "comprising" used in the specification concretely indicates specific properties, regions, integers, steps, operations, elements, and/or components, and is not to exclude the presence or addition of other specific properties, regions, integers, steps, operations, elements, and/or components.

When any part is positioned "on" or "above" another part, it means that the part may be directly on or above the other part or another part may be interposed therebetween. In contrast, when any part is positioned "directly on" another part, it means that there is no part interposed therebetween.

In addition, unless otherwise stated, % means wt%, and 1 ppm is 0.0001 wt%.

Unless defined otherwise, all terms including technical terms and scientific terms used herein have the same meanings as understood by those skilled in the art to which the present disclosure pertains. Terms defined in a generally used dictionary are additionally interpreted as having the meanings matched to the related technical document and the currently disclosed contents, and are not interpreted as ideal or very formal meanings unless otherwise defined.

Hereinafter, exemplary embodiments of the present disclosure will be described in detail. However, these exemplary embodiments are provided as examples, and the present disclosure is not limited by these exemplary embodiments and is defined by only the scope of the claims to be described below.

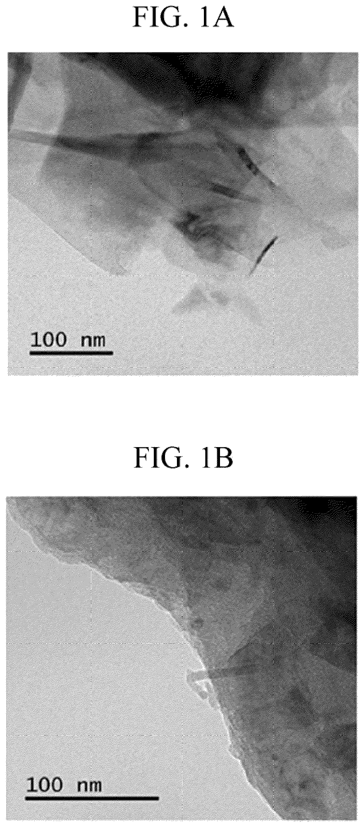

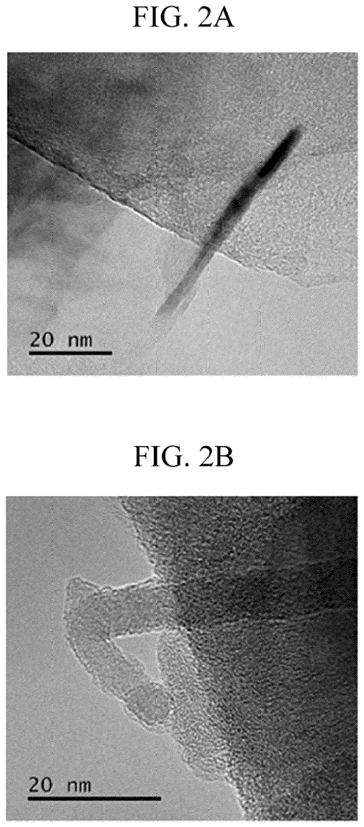

FIGS. 1A and 1B illustrate images of a negative electrode material containing carbon nanotubes according to an exemplary embodiment of the present disclosure, and FIGS. 2A and 2B illustrate enlarged images of FIGS. 1A and 1B.

Specifically, FIG. 2A is an enlarged image of some carbon nanotubes of FIG. 1A, and FIG. 2B is an enlarged image of some carbon nanotubes of FIG. 1B.

With reference to FIGS. 1A to 2B, a negative electrode material for a lithium secondary battery according to an exemplary embodiment of the present disclosure will be described.

Referring to FIGS. 1A and 2B, a negative electrode material for a lithium secondary battery according to an exemplary embodiment of the present disclosure may contain nano-silicon, crystalline carbon, amorphous carbon, and carbon nanotubes.

As the nano-silicon, nano-Si such as MG-Si or Poly-Si may be used. The nano-silicon may be contained in an amount of 45 wt% to 50 wt% with respect to the total weight of the negative electrode material for a lithium secondary battery. When a content of the nano-Si is higher than the above range, the nano-Si and graphite for imparting conductivity and reversibility cannot be completely captured in a high-density pitch carbon layer, which will be described below. In addition, this causes a side effect of collapsing a structure without being able to confirm the characteristics of the nano-Si described above. On the other hand, when the content of the nano-Si is lower than the above range, it is difficult to achieve a high capacity of a Si-carbon composite negative electrode material.

The carbon nanotubes may be contained in an amount of 0.1 wt% to 1.5 wt%, and specifically, 0.25 wt% to 1.25 wt%, with respect to the total weight of the crystalline carbon and the amorphous carbon contained in the negative electrode material. When a content of the carbon nanotubes is lower than the above range, the carbon nanotubes are not sufficiently distributed inside and outside the negative electrode material, and thus may not be able to supplement the conductivity of the nano-silicon inside and provide a sufficient electrical path between the negative electrode material particles. When the content of the carbon nanotubes is higher than the above range, a cost of raw materials increases. In addition, due to a low density of the carbon nanotubes, it may be difficult to form a pitch-based high-density carbon layer, and an electrolyte side reaction may increase due to an increase in specific surface area of the negative electrode material. In addition, as the lifespan decreases and the characteristics captured in the pitch-based carbon layer of nano-Si deteriorate, the expansion characteristics may also deteriorate.

A diameter of the carbon nanotube may be less than 20 nm, and specifically, 5 nm to 10 nm. When the diameter of the carbon nanotube is within the above range, the carbon nanotube may have appropriate mechanical properties and is advantageous for pulverization and dispersion.

In this case, an average length of the carbon nanotubes protruding out of the negative electrode material may be 0.05 µm to 1.2 µm, and specifically, 0.1 µm to 1 µm. When the average length of the protruding carbon nanotubes is within the above range, it is advantageous to effectively provide an electrical path between the negative electrode materials.

In addition, the average length of the carbon nanotubes protruding out of the negative electrode material may be 0.25% to 12%, and specifically, 0.5% to 10% of the total length of the carbon nanotubes.

When the average length of the carbon nanotubes protruding out of the negative electrode material is shorter than the above numerical range, an effective degree of contact between the particles may decrease and an electrical path between the particles may not be effectively provided. In addition, when the average length of the carbon nanotubes protruding out of the negative electrode material is longer than the above numerical range, the length of the carbon nanotube protruding out of the negative electrode material becomes too long, and the specific surface area of the negative electrode material increases, which may cause deterioration of the performance.

Meanwhile, through TEM analysis, the length of the carbon nanotube protruding out of the negative electrode material may be observed and measured. The average length of the carbon nanotubes protruding out of the negative electrode material may be specifically calculated as an average length of 10 or more carbon nanotubes protruding out of the negative electrode material measured through TEM analysis.

In addition, an average particle size (D50) of the negative electrode material excluding the carbon nanotubes protruding out of the negative electrode material may be 10 µm to 20 µm. When the average particle size (D50) of the negative electrode material excluding the carbon nanotubes protruding out of the negative electrode material is smaller than the above range, the length of the carbon nanotube protruding out of the negative electrode material becomes too long, and the specific surface area of the negative electrode material increases, which may cause deterioration of the performance. In addition, in this case, due to the increased number of particles based on equal parts by weight, it is difficult to form a high-density support layer based on amorphous carbon, which may cause deterioration of the performance.

In addition, a density of the negative electrode material according to an exemplary embodiment of the present disclosure may be 0.5 g/cm³ to 1.0 g/cm³, and specifically, 0.6 g/cm³ to 0.9 g/cm³.

In addition, the negative electrode material according to an exemplary embodiment of the present disclosure may have a specific surface area of 4 m²/g to 5.0 m²/g.

When the specific surface area of the negative electrode material is greater than the above range of the value measured by the BET method, a side reaction site with the electrolyte may be provided, which may reduce the capacity, and when the specific surface area is smaller than the above range, electrolyte wettability of the negative electrode material particles may decrease, which may cause a decrease in electrochemical activation speed.

The crystalline carbon may include one or more selected from natural graphite and artificial graphite. In this case, graphite may be used to impart conductivity and reversibility. When the graphite is flaky graphite, the flaky graphite may be added in a composition of less than 50 wt% out of a range of 50 wt% to 55 wt% excluding the content of the nano-Si. The reason is, as described above, to induce effective capturing.

The amorphous carbon may be coal-based pitch. A content of fixed carbon of the coal-based pitch may be, for example, 50 wt% or more, and more specifically, 60 wt% to 80 wt%.

As the content of the fixed carbon of the coal-based pitch increases, a conductive path is formed with Si having low self-conductivity, and thus, capacity and efficiency may be increased. When the content of the fixed carbon satisfies the above range, internal pores of the negative electrode material of the present exemplary embodiment may be reduced. Accordingly, the side reaction with the electrolyte may also be reduced, which may contribute to increasing the initial efficiency of the battery.

A β-resin value of the coal-based pitch may be, for example, 22 or more, and more specifically, 25 to 40 or 25 to 35.

Specifically, the β-resin value means a value excluding a quinoline amount (benzene insoluble) from a benzene-insoluble amount. Such a β-resin value is proportional to a coking property. In the present exemplary embodiment, the structure of the negative electrode material may be maintained more stably because the coal-based pitch that satisfies the above range of the β-resin value is contained. Accordingly, when the negative electrode material according to the exemplary embodiment is applied, a lithium ion battery having excellent lifespan characteristics and electrode plate expansion characteristics may be implemented.

The negative electrode material according to an exemplary embodiment of the present disclosure may be produced by the following method.

First, zirconia beads are used to nano-pulverize silicon by mechanical milling. The same particle size is applied to raw materials, and the zirconia beads are used in a size less than twice that of a D99 of the raw materials added. When the particle size D99 is too large or the zirconia beads are small, nanoization efficiency may excessively decrease, which causes side effects such as an increase in time required for nanoization and subsequent oxidation of silicon. In this case, in order to prevent oxidation of silicon particles, 99.9% purity anhydrous ethanol is used as a solvent, and for effective nanoization, a solid content ratio is set to 8 to 15%. A ball to powder ratio (BPR) of the raw materials to the zirconia beads is set to 5:1, and a rotation speed of a rotor inside a pulverizer is maintained at 2,500 rpm for all Examples.

In the nano-silicon slurry obtained as described above, carbon nanotubes in a range of 0.25 wt% to 1.5 wt% of a weight ratio of a mixture of crystalline carbon and coal-based pitch, which is a raw material of amorphous carbon, are pre-dispersed in 99.9% purity anhydrous ethanol and mixed with the nano-silicon slurry. Crystalline carbon may be additionally mixed thereto. The carbon nanotubes may be mixed in an amount of 0.25 wt% to 1.5 wt% with respect to the total weight of the crystalline carbon and the amorphous carbon contained in the negative electrode material.

Thereafter, a first precursor is obtained in a powder form using a spray dryer. In this case, controlling a size of a droplet during spray drying using the spray dryer may be included. That is, controlling a size of the first precursor may be included. An average particle size (D50) of the first precursor may be controlled to 8 µm to 30 µm, and specifically, 10 µm to 25 µm. The size of the droplet of the first precursor may be controlled by adjusting a slurry injection amount, a disk rotation speed, a spray nozzle size, and the like. However, the control conditions are not limited thereto. When the size of the droplet of the first precursor is within the above range, the protrusion length of the carbon nanotube protruding out of the negative electrode material may be efficiently controlled. When the average particle size (D50) of the first precursor is smaller than the above range, the length of the carbon nanotube protruding out of the negative electrode material becomes too long, and the specific surface area of the negative electrode material increases, which may cause deterioration of the performance. In addition, when the average particle size (D50) of the first precursor is larger than the above range, the length of the carbon nanotube protruding out of the negative electrode material becomes too short, the effective degree of contact between the particles of the negative electrode material decreases, and an electrical path between the particles may not be effectively provided.

The first precursor may be placed in a mold and pressurized at a pressure of 2 ton/cm² or less.

Through this, a specific surface area of the first precursor may be controlled, and a density may be controlled, such that a preparation may be made for producing a negative electrode material described below, which is the object of the present disclosure.

In this case, flaky graphite or artificial graphite may be used as the crystalline carbon, preferably, graphite smaller than the central particle size of the precursor based on the central particle size (D50) may be used, and specifically, the particle size of the graphite may be 5 µm to 10 µm. In general, in the case of silicon, particularly, nano-pulverized silicon, the conductivity of the powder is significantly low due to the low conductivity of the silicon itself and surface oxidation.

Coal-based pitch (carbon source) may be added to the composition during the milling process so that the spray-dried precursor formed of nano-Si-graphite obtained described above may be perfectly bonded by forming a carbon support layer with the nano-Si-graphite precursor in a final product. The milling process may be applied through a contact medium with powder, such as mechano fusion or a ball mill. Thereafter, a process of applying a specific pressure within a specified time range to minimize pores existing inside the nano Si-graphite precursor is applied. The coal-based pitch mixed during press molding may improve electrochemical properties of a negative electrode material powder described below, which is formed by filling micropores inside the first precursor formed in the spray drying process. The press molding is performed by filling a self-manufactured mold with the powder and using a press equipment. In this case, in the press molding, the powder is defined in the form of a block.

After the press molding process, the block is carbonized in an inert atmosphere at lower than 1,000°C, and then, the carbonized block is subjected to a pulverization process using a JET mill or a Pin mill, a coating process is applied to evenly disperse a carbon source such as petroleum pitch or coal tar, PAA, or PVA having a softening point of lower than 250°C on surfaces of the pulverized particles. The coating process is performed using a twisted blade mixer, and process variables include a time, a rotation speed, and the like, but detailed descriptions will be omitted in the present disclosure. Thereafter, a heat treatment is performed at a temperature of lower than 1,000°C in an inert atmosphere, and a final product is manufactured through sieving.

In addition, through TEM analysis, the length of the carbon nanotube protruding out of the negative electrode material produced according to an exemplary embodiment of the present disclosure may be observed and measured. The average length of the carbon nanotubes protruding out of the negative electrode material may be specifically calculated as an average length of 10 or more carbon nanotubes protruding out of the negative electrode material measured through TEM analysis.

### [Mode for Invention]

Hereinafter, Examples of the present disclosure will be described in detail. However, these Examples are merely illustrative, and the present disclosure is not limited by these Examples and is defined by only the scope of the claims to be described below.

### Example 1

Mechanical milling was performed using a silicon raw material, and nano-silicon having an average particle size (D50) of about 100 nm was prepared. A slurry containing pre-dispersed carbon nanotubes was mixed with a slurry containing the prepared nano-silicon, and graphite particles were added and dispersed using a high-speed mixer to form a mixed slurry.

At this time, nano-silicon was mixed in an amount of 50 wt% of the final product negative electrode material, and carbon nanotubes were added in an amount of 1.0 wt% with respect to the weight of carbon contained in the negative electrode material. In addition, an average particle size (D50) of the graphite particles added was similar to an average particle size (D50) of a first precursor obtained in a spray drying step described below.

Next, the mixed slurry was spray-dried to synthesize a first precursor having an average particle size (D50) of about 8 µm.

After mixing the first precursor and a coal-based pitch powder, the first precursor and the coal-based pitch powder were charged into a mold having a specific size to form a carbon support for the powder, and uniaxial press molding was performed at a pressure of 50 ton/cm² for 10 minutes.

The block obtained in the press molding process was subjected to a heat treatment in an inert atmosphere at lower than 1,000°C to prevent oxidation of nano-silicon, and then pulverized to a size of 10 to 15 um based on D50 using a JET mill, the same amount of a coating material in a range of 5 to 10 wt% compared to the amount of nano-silicon added was added, the mixture was stirred with a twisted blade mixer for about 30 minutes, a heat treatment was performed in an inert atmosphere at lower than 1,000°C, and then sieving with #635 mesh (20 um) was performed, thereby obtaining a negative electrode material product containing carbon nanotubes protruding out.

The finally produced negative electrode material and the length of the carbon nanotubes protruding out of the negative electrode material were observed and measured through TEM analysis, and an average length of the carbon nanotubes protruding out of the negative electrode material was obtained. Specifically, an average value of lengths of 10 or more carbon nanotubes protruding out of the negative electrode material measured through TEM analysis was calculated.

The images according to magnification are illustrated in FIGS. 1A to 2B.

### Example 2

A negative electrode material was produced in the same manner as that of Example 1, except that the content of the carbon nanotubes with respect to the content of carbon in the negative electrode material was different.

### Comparative Examples 1 and 2

A negative electrode material was produced in the same manner as that of Example 1, except that the content of the carbon nanotubes with respect to the content of carbon in the negative electrode material was different.

### Comparative Examples 3 to 6

A negative electrode material was produced in the same manner as that of Example 1, except that the average length of the carbon nanotubes protruding out of the negative electrode material was different.

### Production Example

Each of the negative electrode materials produced in Experimental Examples 1 and 2 and Comparative Examples 1 to 6 and commercially available natural graphite were mixed, a negative electrode capacity was maintained at 440 mAh/g, and a test cell (coin half cell) was manufactured. A negative electrode had a composition of active material:conductive material:CMC:SBR = 95.8:1:1.7:1.5, and a rolling density was maintained at 1.6 g/cc. An electrolyte for a lifespan test was EC:EMC = 3:7 (1.0 M LiPF₆)+VC 1.5 wt%.

### Experimental Example 1

First, the conductivity was measured according to the density of the first precursor.

About 10 g of the powder of the first precursor prepared in each of Example 1 and Comparative Example 1 was placed in a container and pressurized to 2 ton/cm² or less for 1 minute at each pressure while changing the pressurization pressure. The conductivity of the pressurized first precursor having different densities was measured according to the pressurization pressure. At this time, the conductivity was measured using a powder resistance measuring device.

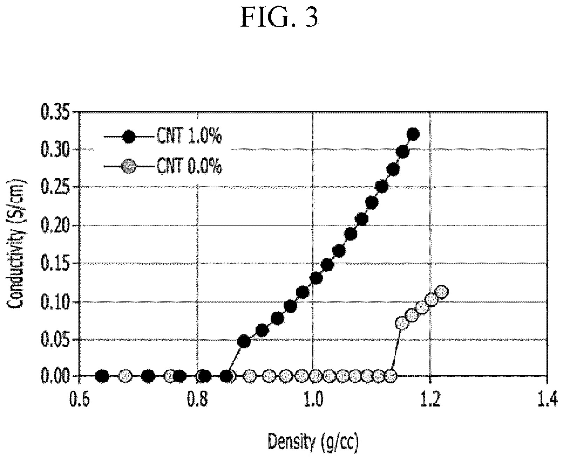

The results of measuring the conductivity of the first precursor according to the change in density are illustrated in FIG. 3. As a result of measuring the resistance of the first precursor while increasing the density of the first precursor from 0.6 g/cm³ to about 1.2 g/cm³, it was found that the density of the first precursor in Example 1 increased rapidly after exceeding 0.8 g/cm³. This is confirmed to be due to the addition of the carbon nanotubes.

In the case of Comparative Example 1, the conductivity was found to increase at about 1.2 g/cm³, which is determined to be due to the crystalline carbon inside the first precursor. Through this, it can be confirmed that the conductivity of silicon may be supplemented when the carbon nanotubes are added.

The conductivity was measured according to the density of the negative electrode material.

The conductivity according to the density of the negative electrode material produced in each of Example 1 and Comparative Example 1 was measured in the same manner as the measurement of the conductivity according to the density of the first precursor.

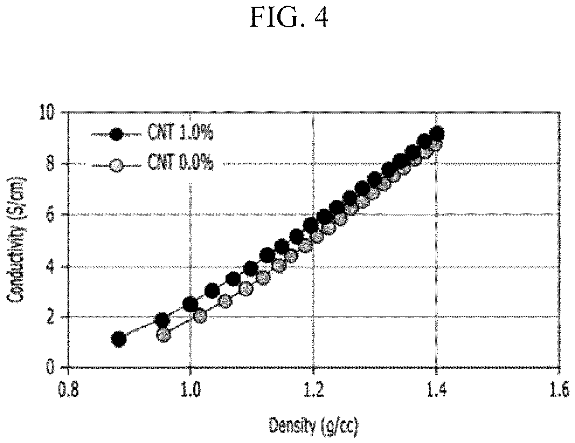

The measurement results are illustrated in FIG. 4.

In the case of Example 1, it was confirmed that, compared to Comparative Example 1, the conductivity was high at the same density, and as the density increased, the conductivity was improved.

As illustrated in FIGS. 1A to 2B, the negative electrode material according to Example 1 contains carbon nanotubes that protrude not only inside the negative electrode material but also outside the negative electrode material. It can be confirmed that as the density increases, the carbon nanotubes protruding out of the negative electrode material increase the conductivity of the negative electrode material through physical bonding with adjacent particles.

Therefore, it can be confirmed that the added carbon nanotubes supplement the conductivity of nano-silicon inside the negative electrode material and increase the overall conductivity through electrical connection to the surface of the adjacent negative electrode material by protruding out of the negative electrode material.

### Experimental Example 2

A specific surface area of the negative electrode material according to each of Examples 1 and 2 and Comparative Examples 1 to 6 was measured.

The specific surface area was measured using a BET method by adsorbing/desorbing nitrogen gas using ASAP 2020 equipment manufactured by Micromeritics Instrument Corporation.

The specific surface area measurement results are shown in Tables 1 and 2.

### Experimental Example 3

Lifespan characteristics of test cells manufactured using the negative electrode materials obtained in Examples 1 and 2 and Comparative Examples 1 and 2 were evaluated after an initial charge and discharge test in the following manner.

In Table 1, the capacity (mAh/g) is obtained by manufacturing a CR2032 coin cell, cut-off charging the coin cell at 0.1 C, 0.005 V, and 0.005 C, and cut-off discharging the coin cell at 0.1 C and 1.5 V, and the efficiency (%) is obtained as a ratio of the discharge capacity to the charge capacity of 0.1 C.

The expansion (%) is obtained as a rate of increase in the thickness of the charging electrode after 50 cycles with a current of 0.5 C compared to the initial electrode thickness.

### Experimental Example 4

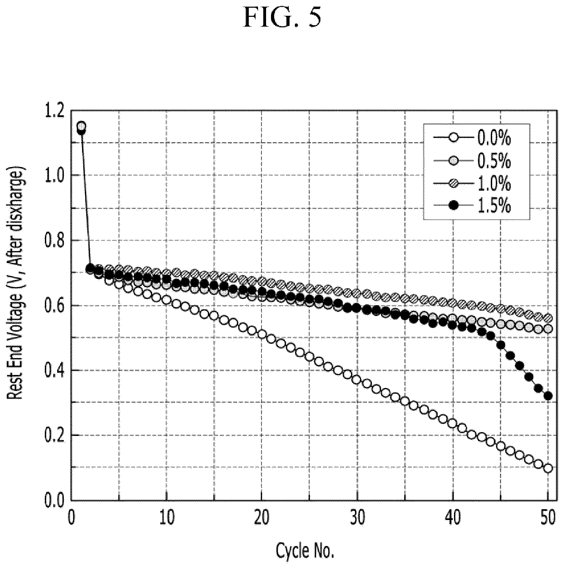

The results of measuring the recovery voltage when a rest for 20 minutes was completed after the end of discharge according to the charge-discharge cycles in Example 1 and Comparative Examples 1 to 4 are illustrated in FIG. 5.

As the average length of the protruding carbon nanotubes increased, an increase in specific surface area was observed, and there was no significant change in capacity-efficiency, but a decrease in lifespan was observed due to the increase in specific surface area. Meanwhile, in the case where there was no external protrusion, the specific surface area was the smallest, but the electrical contact ratio between the particles was small, and therefore, the lifespan characteristics were the lowest, and the expansion was confirmed to be at a similar level.

Referring to Tables 1 and 2, when the content of carbon in the negative electrode material is 1.00 wt% and the average length of the carbon nanotubes protruding out of the negative electrode material is 1 µm, it can be confirmed that the performance of the test cell to which the negative electrode material according to the present disclosure is applied is the best.

**[Table 1]**

| Classification | Content of carbon nanotubes with respect to content of carbon in negative electrode material (wt%) | Performance of negative electrode material | | | | | |
|---|---|---|---|---|---|---|---|
| | | Specific surface area (m²/g) | Capacity (mAh/g) | Efficiency (%) | Lifespan (%, 50^{th} graphite mix, 440 mAh/g) | Expansion (%, 50^{th}) | Discharge end voltage (V, 50^{th}) |
| Example 1 | 1.00 | 4.38 | 1,464 | 85.2 | 78.4 | 41.7 | 0.5608 |
| Example 2 | 0.50 | 4.14 | 1,454 | 85.7 | 54.9 | 46.5 | 0.5268 |
| Comparative Example 1 | 0.00 | 5.75 | 1,391 | 83.1 | 71.8 | 58.7 | 0.3214 |
| Comparative Example 2 | 1.50 | 3.94 | 1,410 | 84.5 | 53.6 | 71.4 | 0.0966 |

The present disclosure is not limited to the exemplary embodiments, but may be prepared in various different forms, and it will be apparent to those skilled in the art to which the present disclosure pertains that the exemplary embodiments may be implemented in other specific forms without departing from the spirit or essential feature of the present disclosure. Therefore, it is to be understood that the exemplary embodiments described hereinabove are illustrative rather than restrictive in all aspects.

## Claims

1. A negative electrode material for a lithium secondary battery, the negative electrode material comprising: nano-silicon, crystalline carbon, amorphous carbon, and carbon nanotubes,
wherein one end of the carbon nanotube is located inside the negative electrode material and the other end of the carbon nanotube protrudes out of the negative electrode material, and
an average length of the carbon nanotubes protruding out of the negative electrode material is 0.1 µm to 1 µm.

2. The negative electrode material of claim 1, wherein:
the average length of the carbon nanotubes protruding out of the negative electrode material is 0.5% to 10% of the total length of the carbon nanotubes.

3. The negative electrode material of claim 1, further comprising:
carbon nanotubes located only inside the negative electrode material.

4. The negative electrode material of claim 1, wherein:
a content of the carbon nanotubes is 0.25 wt% to 1.5 wt% with respect to the total weight of the crystalline carbon and the amorphous carbon contained in the negative electrode material.

5. The negative electrode material of claim 1, wherein:
a specific surface area of the negative electrode material is 4 m²/g to 5.0 m2/g.

6. The negative electrode material of claim 1, wherein:
the amorphous carbon is coal-based pitch having a content of fixed carbon of 70 wt% or more and a β-resin value of 25 or more.

7. The negative electrode material of claim 1, wherein:
the crystalline carbon includes one or more selected from natural graphite and artificial graphite.

8. A method for producing a negative electrode material for a lithium secondary battery, the method comprising:
preparing a solution by mixing a nano-silicon slurry, a carbon nanotube slurry, and crystalline carbon;
preparing a first precursor by spray drying the solution;
mixing the first precursor and amorphous carbon, filling a mold with the mixture, performing pressurization at a high temperature, and then performing carbonization to produce a carbonized block;
preparing a second precursor by mixing and coating the produced carbonized block with amorphous carbon; and
carbonizing and classifying the second precursor,
wherein the preparing of the first precursor by spray drying the solution includes controlling an average particle size (D50) of the first precursor to 8 µm to 30 µm.

9. The method of claim 8, wherein:
in the controlling of the size of the first precursor,
the average particle size (D50) of the first precursor is controlled to 10 µm to 25 µm.

10. The method of claim 8, wherein:
in the preparing of the solution by mixing the nano-silicon slurry, the carbon nanotube slurry, and the crystalline carbon,
a content of the carbon nanotubes is 0.25 wt% to 1.5 wt% with respect to the total weight of the crystalline carbon and the amorphous carbon contained in the negative electrode material.

11. The method of claim 8, wherein:
in the produced negative electrode material for a lithium secondary battery,
one end of the carbon nanotube is located inside the negative electrode material and the other end of the carbon nanotube protrudes out of the negative electrode material, and
an average length of the carbon nanotubes protruding out of the negative electrode material is 0.1 µm to 1 µm.

12. The method of claim 8, wherein:
in the produced negative electrode material for a lithium secondary battery,
one end of the carbon nanotube is located inside the negative electrode material and the other end of the carbon nanotube protrudes out of the negative electrode material, and
an average length of the carbon nanotubes protruding out of the negative electrode material is 0.5% to 10% of the total length of the carbon nanotubes.
